Europäisches Patentamt

European Patent Office

Office européen des brevets

(19)

(11) Veröffentlichungsnummer: **0 045 397**
**B1**

(12) **EUROPÄISCHE PATENTSCHRIFT**

(45) Veröffentlichungstag der Patentschrift: **21.01.87**

(51) Int. Cl.⁴: **H 01 G 4/22, H 01 G 4/32**

(21) Anmeldenummer: **81105362.8**

(22) Anmeldetag: **09.07.81**

(54) Imprägnierter Wickelkondensator.

(30) Priorität: **01.08.80 DE 3029326**

(43) Veröffentlichungstag der Anmeldung:
**10.02.82 Patentblatt 82/06**

(45) Bekanntmachung des Hinweises auf die
Patenterteilung:
**21.01.87 Patentblatt 87/04**

(84) Benannte Vertragsstaaten:
**FR GB IT SE**

(56) Entgegenhaltungen:
EP-A-0 008 623
EP-A-0 010 363
EP-A-0 011 796
DE-A-1 802 327
DE-A-2 722 087
GB-A-1 250 450
US-A-4 131 931

(73) Patentinhaber: **Roederstein Spezialfabriken für
Bauelemente der Elektronik und Kondensatoren
der Starkstromtechnik GmbH
Ludmillastrasse 23/25
D-8300 Landshut (DE)**

(72) Erfinder: **Huber, Robert
Max-Reger-Strasse 3
D-8303 Rottenburg (DE)**

(74) Vertreter: **Weickmann, Heinrich, Dipl.-Ing. et al
Patentanwälte Dipl.-Ing. H.Weickmann Dipl.-
Phys.Dr. K.Fincke Dipl.-Ing. F.A.Weickmann
Dipl.-Chem. B. Huber Dr.-Ing. H. Liska Dipl.-
Phys.Dr. J. Prechtel Postfach 860820
D-8000 München 86 (DE)**

Courier Press, Leamington Spa, England.

EP 0 045 397 B1

## Beschreibung

Die Erfindung betrifft einen imprägnierten Wickelkondensator nach dem Oberbegriff des Anspruchs 1.

Wickelkondensatoren dieser Art sind nach der EP—A—0010363 bekannt. Sie weisen unterschiedliche rauhe, aber immer noch relativ glatte Kunststoff-Folien auf. Werden solche Kondensatoren—wie es wünschenswert ist, um eine hohe Kapazitätsstabilität zu erhalten—mit einem hohen Wickelzug gewickelt, um Lufteinschlüsse zu vermeiden, so dringt beim Imprägnieren das Imprägniermittel nur in ihre Stirnseiten ein und der überwiegende Teil der Wickelbreite bleibt trocken. Es hat sich gezeigt, daß dies einer der Gründe dafür sein kann, warum die Kapazität solcher Kondensatoren im Laufe der Zeit abfällt und warum die Betriebsspannung dieser Kondensatoren nicht so hoch gewählt werden kann, wie dies an sich wünschenswert ist.

Aufgabe der Erfindung ist es daher, einen Wickelkondensator eingangs genannter Art anzugeben, der eine verhältnismäßig hohe Kapazitätsstabilität auch bei Dauerbelastung hat und mit einer verhältnismäßig hohen Betriebsspannung betrieben werden kann.

Die Lösung dieser Aufgabe ist im Kennzeichen des Anspruchs 1 angegeben.

Der Spacefaktor kennzeichnet den Rauhigkeitsgrad der Oberflächen der Folien. Die angegebenen Werte kennzeichnen Folien, die wenigstens eine ungewöhnlich rauhe Oberfläche haben. Die Rauhigkeit bewirkt, daß das Imprägniermittel den gewickelten Kondensator vollständig oder zumindest weitgehend durchtränkt, wenn es dabei die Folie nicht zu stark aufquellen läßt. Dies und der angegebene Imprägniertemperaturbereich sind der Grund dafür, daß die Volumenquellung der Folie begrenzt wird.

Eine Seite der Kunststoff-Folie ist rauher als die andere, und die Metallisierung befindet sich vorzugsweise auf der weniger rauhen Seite. Durch diese Wahl wird die oben genannte Aufgabe besonders vorteilhaft gelöst.

Als Material für die Kunststoff-Folie hat sich besonders Polypropylen bewährt. Als Imprägniermittel haben sich besonders bewährt: pflanzliche Ester, insbesondere Rizinus, Phthalatester, Polybutadien oder Silikonöle. Unter diesen Imprägniermitteln sorgt Rizinus am besten für die Kapazitätsstabilisierung.

Die Metallisierung besteht—wie an sich bekannt—bevorzugt aus Aluminium oder Zink oder zu einem überwiegenden Anteil aus diesen Metallen.

Um ein Quellen der Kunststoff-Folie unter den genannten Bedingungen zu begrenzen, erfolgt die Imprägnierung des Kondensators bevorzugt bei einer Temperatur von weniger als 80°C, insbesondere zwischen 50°C und 60°C.

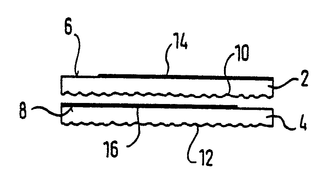

Die Erfindung wird im folgenden an einem Ausführungsbeispiel unter Hinweis auf die beigefügte Zeichnung erläutert.

Eine erste Polypropylenfolie 2 wird mit einer zweiten Polypropylenfolie 4 zu einem Wickelkondensator gewickelt. Die einen Seiten 6, 8 dieser Folien 2, 4 sind verhältnismäßig glatt, die anderen Seiten 10, 12 verhältnismäßig rauh. Auf die glatten Seiten 6, 8 sind in bekannter Weise Metallisierungen 14, 16 aus Aluminium aufgedampft. Die Metallisierungen 14 reicht bis zur rechten Stirnfläche, endet aber vor der linken Stirnfläche; die Metallisierung 16 reicht bis zur linken Stirnfläche, endet aber vor der rechten Stirnfläche. Bei der Imprägnierung findet das Imprägniermittel einen Weg durch die Unebenheiten der rauhen Seiten 10, 12 bis in das Innere des Kondensators hinein, auch dann, wenn der Kondensator verhältnismäßig fest gewickelt ist.

## Patentansprüche

1. Imprägnierter Wickelkondensator mit einem Dielektrikum, das durch wenigstens eine Kunststoff-Folie gebildet ist, deren eine Oberfläche rauher als deren andere Oberfläche ist, und mit wenigstens einer Elektrode, die durch eine Metallisierung auf einer Seite dieser Kunststoff-Folie oder einer anderen Kunststoff-Folie gebildet ist, bei dem wenigstens die als Dielektrikum dienende Folie einen Spacefactor zwischen 4% und 20%, vorzugsweise zwischen 8% und 20%, aufweist, dadurch gekennzeichnet, daß der Spacefaktor in folgender Weise definiert ist:

Es werden 10 Lagen der Folie übereinandergelegt und einem Druck von 0,2 N/mm$^2$ ausgesetzt; die Höhe dieses zusammengedrückten Stapels wird gemessen: dies ist der Meßwert $W_1$; unabhängig hiervon wird mit Hilfe des Gewichtes berechnet, welche Höhe der Stapel hätte, wenn in ihm keine Luft eingeschlossen wäre; der berechnete Wert ist $W_2$; der Spacefaktor (in %) ist dann gegeben durch

$$\frac{W_1 - W_2}{W_2} \times 100,$$

daß diese Folie aus einem Material besteht, das im noch nicht gewickelten Zustand nach Lagerung in dem zur Imprägnierung vorgesehenen Imprägniermittel bei Tränktemperatur eine kleinere Volumequellung als den ermittelten Spacefaktor erfährt, und daß der Kondensatorwickel bei einer Temperatur von weniger als 80°C, bevorzugt zwischen 50°C und 60°C, imprägniert ist.

2. Wickelkondensator nach Anspruch 1, dadurch gekennzeichnet, daß sich die Metallisierung auf der weniger rauhen Seite der Kunststoff-Folie befindet.

3. Wickelkondensator nach einem der vorstehenden Ansprüche, dadurch gekennzeichnet, daß die Kunststoff-Folie aus Polypropylen besteht.

4. Wickelkondensator nach einem der vorstehenden Ansprüche, dadurch gekennzeichnet, daß das Imprägniermittel aus einem pflanzlichen Ester, insbesondere Rizinus, einem Phthalatester, aus einem Polybutadien oder aus einem Silikonöl besteht.

5. Wickelkondensator nach einem der vorstehenden Ansprüche, dadurch gekennzeichnet, daß die Metallisierung aus Aluminium oder Zink oder zu einem überwiegenden Anteil aus diesen Metallen besteht.

**Revendications**

1. Condensateur bobiné imprégné, muni d'un diélectrique formé par au moins une feuille en matière plastique dont l'une des surfaces est plus rugueuse que son autre surface, ainsi que d'au moins une électrode formée par une métallisation sur une face de cette feuille en matière plastique, ou d'une autre feuille en matière plastique, condensateur dans lequel au moins la feuille servant de diélectrique présente un coefficient de remplissage compris entre 4% et 20%, de préférence entre 8% et 20%, caractérisé par le fait que le coefficient de remplissage est défini de la façon suivante:

10 couches de la feuille sont superposées et soumises à une pression de 0,2 N/mm²; la hauteur de cet empilement comprimé est mesurée: il en résulte la valeur mesurée $W_1$; l'on calcule indépendamment de cela, à l'aide du poids, quelle hauteur l'empilement présenterait s'il n'emprisonnait pas d'air; la valeur calculée est $W_2$; le coefficient de remplissage (en %) est alors donné par

$$\frac{W_1-W_2}{W_2}\times100;$$

par le fait que cette feuille consiste en un matériau qui, en condition non encore bobinée et après séjour prolongé dans le moyen d'imprégnation prévu pour l'imprégnation, subit, à la température d'imprégnation, un gonflement de volume plus petit que le coefficient de remplissage établi; et par le fait que l'enroulement de condensateur est imprégné à une température inférieure à 80°C, de préférence comprise entre 50°C et 60°C.

2. Condensateur bobiné selon la revendication 1, caractérisé par le fait que la métallisation se trouve sur la face de la feuille en matière plastique accusant une rugosité moindre.

3. Condensateur bobiné selon l'une des revendications précédentes, caractérisé par le fait que la feuille en matière plastique consiste en du polypropylène.

4. Condensateur bobiné selon l'une des revendications précédentes, caractérisé par le fait que l'agent d'imprégnation consiste en un este végétal, en particulier du ricin, en un ester phtalique, en un polybutadiène ou en une huile siliconée.

5. Condensateur bobiné selon l'une des revendications précédentes, caractérisé par le fait que la métallisation consiste en de l'aluminium ou du zinc, ou en une part prépondérante de ces métaux.

**Claims**

1. An impregnated wound capacitor with a dielectric which is formed by at least one plastics film, one surface of which is rougher than the other surface, and with at least one electrode which is formed by metallisation of one side of this plastics film or another plastics film, wherein at least the film serving as the dielectric has a space factor of between 4% and 20%, preferably between 8% and 20%, characterised in that the space factor is defined in the following manner:

10 layers of the film are placed on top of one another and subjected to a pressure of 0.2 N/mm²; the height of this compressed stack is measured: this is the measured value $W_1$; independently thereof there is measured using a weight the height which the stack would have if no air were entrapped therein; this measured value is $W_2$; the space factor (in %) is then given by

$$\frac{W_1-W_2}{W_2}\times100,$$

in that this film consists of a material which in the unwound state, after being left in the impregnating medium intended for the impregnation at impregnation temperature, undergoes a smaller volume expansion than the space factor determined, and in that the capacitor winding is impregnated at a temperature of less than 80°C, preferably between 50°C and 60°C.

2. A wound capacitor according to Claim 1, characterised in that the metallisation is provided on the less rough side of the plastics film.

3. A wound capacitor according to any of the preceding Claims, characterised in that the plastics film comprises polypropylene.

4. A wound capacitor according to any of the preceding Claims, characterised in that the impregnating medium comprises a vegetable ester, in particular of the castor oil plant, a phthalate ester, a polybutadiene or a silicone oil.

5. A wound capacitor according to any of the preceding Claims, characterised in that the metallisation comprises aluminium or zinc or a predominant proportion of these metals.